# EUROPÄISCHE PATENTSCHRIFT

(11) **EP 1 489 712 B1**
(45) Veröffentlichungstag und Bekanntmachung des Hinweises auf die Patenterteilung: **11.11.2015**
(21) Anmeldenummer: 04013973.5
(22) Anmeldetag: 15.06.2004
(51) Int. Cl.: H02G 3/08

(54) **Zugentlastung für ein Elektrokabel**
Strain relief for electrical cable
Soulagement de contrainte pour câble électrique

(30) Priorität: 16.06.2003 DE 10327043
(43) Veröffentlichungstag der Anmeldung: 22.12.2004
(73) Patentinhaber: BSH Hausgeräte GmbH, 81739 München (DE)
(72) Erfinder: Bleier, Konrad, 76599 Weisenbach (DE); Hintermayer, Manfred, 76185 Karlsruhe (DE)

(56) Entgegenhaltungen:
- EP-A1- 0 353 539
- DE-U- 1 940 584
- FR-A1- 2 880 211
- US-A- 6 126 122

## Beschreibung

Die Erfindung betrifft eine Zugentlastung für ein Elektrokabel nach dem Oberbegriff des Anspruchs 1.

Es sind bereits verschiedene Ausführungen von Zugentlastungen für Elektrokabel bekannt, bei denen ein mit einer rinnenförmigen Kabelaufnahme für das Elektrokabel versehenes Basisteil, das an einem Gehäuse eines Elektrogerätes fixiert ist, mit einem das Basisteil überbrückenden Klemmteil verbunden ist, wobei das Klemmteil am Basisteil mittels einer Rast- oder Clipsvorrichtung arretiert wird und dabei das Elektrokabel zwischen Basisteil und Klemmteil festgeklemmt wird.

Eine derartige Zugentlastung ist aus DE 200 04 983 U1 bekannt, bei der das Klemmteil zwei beabstandete Schenkel mit jeweils einem Führungsabschnitt und einem mit dem Führungsabschnitt biegeelastisch verbundenen Rastabschnitt mit einer Verzahnung aufweist. Die mit der Verzahnung versehenen Schenkel des Klemmteils werden zum Klemmen des Kabels in an zwei Stegen des Basisteils ausgebildeten Führungen eingeschoben. An den beiden Stegen des Basisteils ist jeweils ebenfalls eine Verzahnung angebracht, wobei die Verzahnungen an den beiden Stegen des Basisteils nach innen weisen und mit den am Klemmteil nach außen weisenden Verzahnungen als Rastvorrichtung zusammenwirken. Jeder der beiden Schenkel des Klemmteils weist außerdem an den freien Enden eine Verlängerung auf, wobei durch eine an den verlängerten Enden angreifende Kraft durch Zusammendrücken der Schenkel die Rastvorrichtung lösbar ist.

Eine Zugentlastung für einen direkten Anschluss von Versorgungs- und/oder Steuerleitungen an einen in einem Gehäuse angeordneten Elektromotor ist aus der DE 199 50 189 A1 bekannt. Die Zugentlastung, die in einen am Gehäuse ausgebildeten Steckschacht einsteckbar ist, besteht aus zwei einstückigen, über ein Filmscharnier miteinander verbundenen Aufnahmeteilen für die Leitungen, die durch Zusammenklappen über das Filmscharnier zwischen den Aufnahmeteilen geklemmt werden. Die Verriegelung der beiden Aufnahmeteile wird dabei mittels einer Rastvorrichtung erzeugt.

Eine Zugentlastung für ein Elektrokabel, die an einem Steckverbindergehäuse ausgebildet ist, ist aus der DE 29 03 954 C2 bekannt. Dabei ist ein Klemmteil mit zwei V-förmigen Schenkeln vorgesehen, das in ein ebenfalls V-förmiges Rastteil einsteckbar und einrastbar ist und im verrasteten Zustand die Schenkel des Klemmteils das Elektrokabel einklemmen.

Eine aus der DE 100 45 714 A1 bekannte Steckverbindung für einen Flachfolienleiter weist eine Zugentlastung für den Flachfolienleiter auf, bei der der Flachfolienleiter zwischen einem Trägerteil und einem über ein Bandscharnier mit dem Trägerteil verbundenen Klemmteil geklemmt ist. Zur Verriegelung ist am Klemmteil eine Lasche angeformt, die in der geschlossenen Klemmstellung in eine am Trägerteil ausgebildete Rastöffnung eingreift. Zusätzlich weist das Klemmteil zwei Stifte auf, die durch zwei im Flachfolienleiter vorhandene Durchführungen greifen und in zwei am Trägerteil ausgebildete Öffnungen einrasten.

Ein weiterer Steckverbinder zum Anschließen elektrischer Leitungen an eine Leiterplatte, bei dem der elektrische Leiter ebenfalls zwischen zwei über ein Filmscharnier verbundene Teile geklemmt wird und die beiden Teile in der Klemmstellung durch Rastmittel verriegelt werden, ist aus DE 200 09 788 U1 bekannt.

Die EP 0 353 539 A1 offenbart eine Klemmvorrichtung für eine elektrische Verbindung. Die Klemmvorrichtung besteht dabei aus zwei getrennten Elementen, welche gegensätzliche Mittel zum Eingreifen ineinander aufweisen. Das erste Element, welches zum Befestigen an einer elektrischen Anschlussplatte vorgesehen ist, weist dabei durchgehende Öffnungen auf, welche an einer Innenwand eine Zunge haben. In diese greift eine Verzahnung von Schenkeln des zweiten Elements ein, welche in besagte Öffnungen gesteckt werden.

Die US 6 126 122 A offenbart eine Klemmvorrichtung für ein Rohr oder ein Kabel. Dabei hat eine Basisplatte ein paar verlägerte Arme welche sich von der Basisplatte weg erstrecken. Jeder Arm weist an seiner Außenseite Rastzähne auf. Ein Klemmblock weist dabei Öffnungen für die Arme der Grundplatte auf. Diese Öffnungen sind mit einer Sperrklinke zum Verrasten mit den Rastzähnen versehen.

Aufgabe der vorliegenden Erfindung ist es, eine Zugentlastung für ein Elektrokabel zu schaffen, die kompakt und montagefreundlich ausgeführt ist und sich darüber hinaus kostengünstig herstellen lässt.

Die Aufgabe wird mit einer Zugentlastung gemäß den kennzeichnenden Merkmalen des Anspruchs 1 gelöst. Die erfindungsgemäße Zugentlastung weist an den beiden Schenkeln des Basisteils bezüglich der Kabelaufnahme jeweils eine nach außen weisende Verzahnung auf , die mit einer nach innen weisenden Verzahnung des Klemmteils zusammenwirkt. Dadurch lässt sich die Zugentlastung in der Breite, d. h. senkrecht zur Kabelverlaufsrichtung auf ein geringes Maß begrenzen. Die erfindungsgemäße Zugentlastung zeichnet sich somit durch einen kompakten Aufbau aus und ist darüber hinaus montagefreundlich. Zum Festklemmen des Elektrokabels muss lediglich das Klemmteil in die Führungsstege des Basisteils eingesteckt und durch einen im Wesentlichen senkrechten Druck auf das Klemmteil in Richtung des in der Aufnahme postierten Elektrokabels gepresst werden, wobei sich das Klemmteil durch die Rastvorrichtung am Basisteil arretiert. Das Elektrokabel wird dadurch in der elektrischen Anschlussstelle im Gerät mechanisch unbelastet gehalten. Durch die einstückige Ausführung ist die Zugentlastung außerdem fertigungstechnisch einfach und kostengünstig herstellbar.

Vorteilhafte Weiterbildungen der Erfindungen gehen aus den Unteransprüchen hervor. Dadurch, dass an den Schenkeln jeder Verzahnung jeweils ein Führungssteg zugeordnet ist, an dem eine am Klemmteil ausgebildete Führungsaufnahme geführt ist, und dass die Führungsstege jeweils einseitig und parallel verlaufend neben den Verzahnungen außerhalb der Aufnahme angeordnet sind, liegen die Verzahnungen und die Führungen in Kabelverlaufsrichtung hintereinander. Dadurch ist für die Führungen kein zusätzlicher Bauraum in der Breite der Zugentlastung notwendig und die Kompaktheit kann weiter erhöht werden. Eine besonders zweckmäßige Ausführungsform hinsichtlich Kompaktheit besteht darin, dass die Führungen am Basisteil als L-förmige Führungsstege und die Führungsaufnahmen am Klemmteil als Nuten in U-förmigen Endabschnitten an Seitenwänden ausgebildet sind. Durch die von der Kabeleinführöffnung geneigt wegführende Kabelführung zur Bodenöffnung des Basisteils hin und durch die über der Kabeleinführung liegenden Abdeckung wird das Elektrokabel an der Umlenk- bzw. Biegestelle, die in das Gehäuse führt, geschützt. Eine wirkungsvolle Klemmung des Elektrokabels in der Zugentlastung wird erreicht, wenn am Boden der Aufnahme des Basisteils mindestens eine Klemmkante und am Klemmteil mindestens zwei Klemmkanten ausgebildet sind und wenn in Klemmstellung des Elektrokabels die basisteilseitige Klemmkante zwischen den klemmteilseitigen Klemmkanten liegt. Durch mindestens eine entgegen der Zugrichtung des Elektrokabels weisende Schneide an den Klemmkanten drückt die mindestens eine Schneide bei Zugbelastung des Elektrokabels in die Isolierung desselben ein, so dass die Anschlussstelle auch vor hohen Zugbelastungen des Elektrokabels gesichert ist.

Ein Ausführungsbeispiel der Erfindung ist in der Zeichnung dargestellt und in der nachfolgenden Beschreibung näher erläutert.

Es zeigen:
- Figur 1 eine perspektivische Darstellung der erfindungsgemäßen Zugentlastung,
- Figur 2 eine Draufsicht auf die Zugentlastung gemäß Figur 1,
- Figur 3 eine Frontalansicht der Zugentlastung gemäß Figur 1 in Klemmstellung,
- Figur 4 eine Schnittdarstellung nach der Line IV - IV in Figur 3 und
- Figur 5 einen vergrößerten Ausschnitt einer Teilschnittdarstellung nach der Linie V - IV in Figur 3.

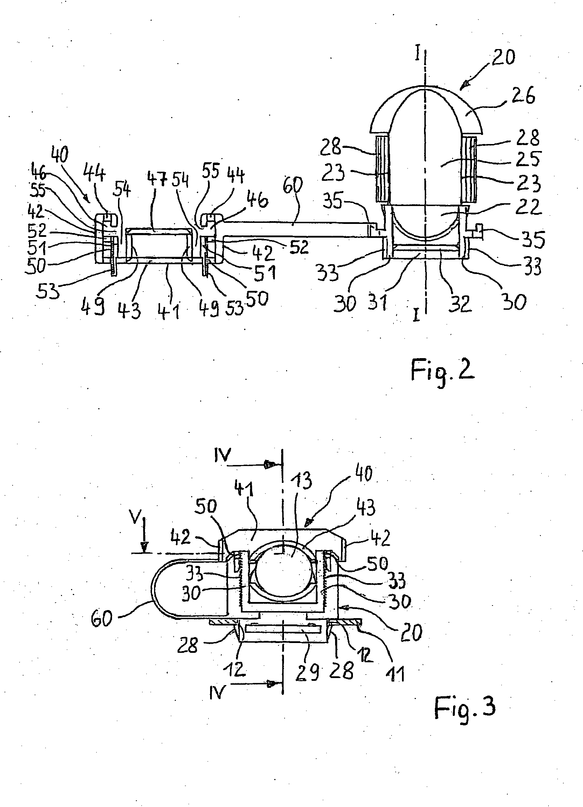

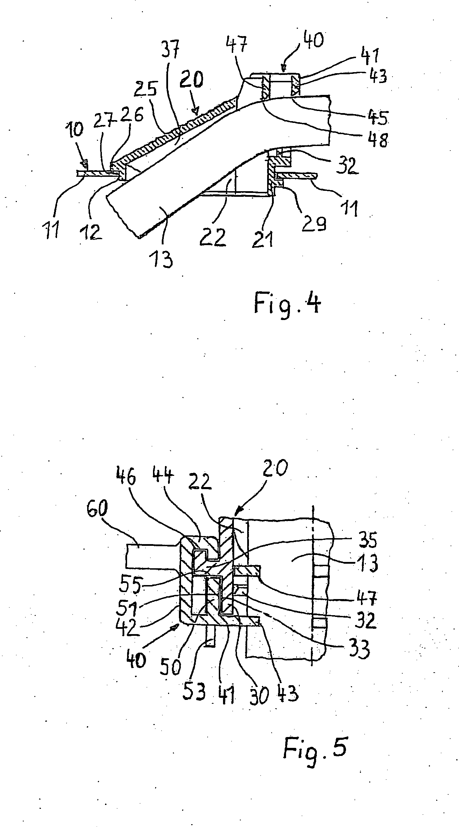

Die in den Figuren dargestellte Zugentlastung ist einstückig beispielsweise als Spritzgussteil aus Kunststoff ausgeführt und wird an einem Gehäuse 10 eines Elektrogerätes, beispielsweise eines Elektroherdes eingesetzt. Die in das Gehäuse 10 eingesetzte Zugentlastung ist in Figur 3 und 4 dargestellt. Dabei weist eine Gehäusewand 11 des Gehäuses 10 eine Öffnung 12 auf, in die die Zugentlastung, wie später noch beschrieben wird, durch Einclipsen eingesetzt wird. Ein von der Zugentlastung fixiertes Elektrokabel 13 ist durch die Öffnung 12 in das Innere des Gehäuse 10 zu einer nicht dargestellten Anschlussstelle geführt. Die Kabelverlaufsrichtung des Elektrokabels 13 bezüglich der Ebene der Gehäusewand 11 verläuft dabei entsprechend der Linie I - I in Figur 2. Bezüglich einer rechtwinkligen Ebene zur Gehäusewand 11 verläuft das Elektrokabel 13 gemäß Figur 4 in einem Winkel geneigt in Richtung der Anschlussstelle in das Gehäuse 10.

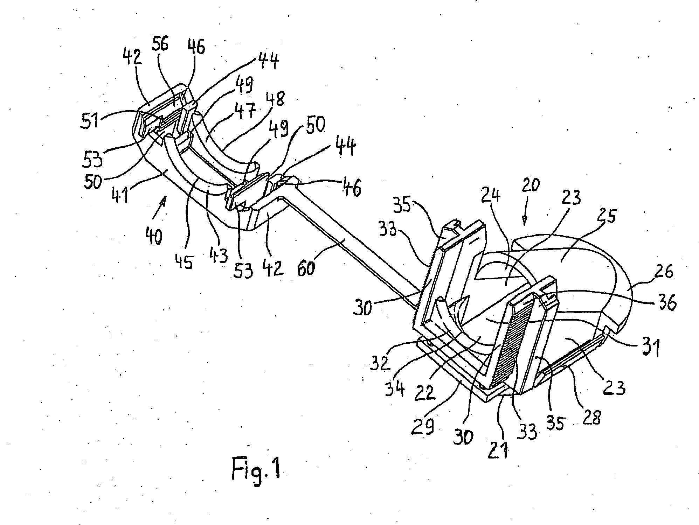

Die Zugentlastung setzt sich gemäß Figur 1 und 2 aus einem Basisteil 20 und einem brückenartigen Klemmteil 40 zusammen, wobei das Klemmteil 40 mittels eines flexiblen Bandscharniers 60 an das Basisteil 20 gekoppelt ist. Das Basisteil 20 weist einen geräteseitigen umlaufenden Tragrahmen 21 mit einer Bodenöffnung 22 auf. Auf dem Tragrahmen 21 sitzen senkrecht zwei basisteilseitige Seitenwände 23, zwischen denen eine Kabeleinführöffnung 24 ausgebildet ist. Von der Kabeleinführöffnung 24 führt in Kabelverlaufsrichtung eine geneigte Kabelführung 37 zur Bodenöffnung 22 hin. Die Kabelführung 37 wird von einer erhabenen Abdeckung 25 überspannt. Die Abdeckung 25 verläuft von der Kabeleinführöffnung 24 aus beispielsweise um 30 Grad geneigte zum Tragrahmen 21 hin. Die Abdeckung 25 geht am Tragrahmen 21 in beispielsweise einen bogenförmigen Stützrand 26 über, der eine gehäusewandseitige Stützfläche 27 bildet, mit der im eingebauten Zustand das Basisteil 20 auf der Gehäusewand 11 aufliegt (Figur 4). Am Tragrahmen 21 sind jeweils parallel zu den Seitenwänden 23 zwei federnde Clipsleisten 28 angeordnet, die nach dem Einclipsen des Basisteils 20 in die Öffnung 12 gemäß Figur 3 die Gehäusewand 11 von innen hintergreifen. Zur Arretierung des Basisteils 20 in der Öffnung 12 ist am Tragrahmen 21 ferner ein Anschlagsteg 29 angeformt, der die Gehäusewand 11 beim Einsetzen das Basisteils 20 von innen hintergreift (Figur 4). Im eingesetzten Zustand überdeckt die Zugentlastung die gesamt Öffnung 12, so dass an der Öffnung 12 ein wirkungsvoller Schnittkantenschutz vorliegt.

Frontal vor der Kabeleinführöffnung 24 befinden sich seitlich zwei im Wesentlichen parallel zu den Seitenwänden 23 verlaufende Schenkel 30, die jeweils in der Höhe über die Kabeleinführöffnung 24 hinaus ragen. Die beiden Schenkel 30 bilden zwischen sich eine Kabelaufnahme 31 aus, die am Grund eine basisteilseitige Klemmkante 32 mit einer bogenförmigen Schneide 34 besitzt. Die Kabelaufnahme 31 ist entgegengesetzt zur Klemmkante 32 nach oben hin offen. Außerhalb der Kabelaufnahme 31 ist an den Schenkeln 30 jeweils eine basisteilseitige Verzahnung 33 ausgeführt, die sich im Wesentlichen über die gesamte Höhe der Schenkel 30 erstreckt. Ebenfalls außerhalb der Kabelaufnahme 31 verläuft neben den beiden Verzahnungen 33 jeweils ein L-förmiger Führungssteg 35. Die beiden L-förmigen Führungsstege 35 sind dabei frontal betrachtet hinter der jeweiligen Verzahnung 33 angeordnet und unmittelbar anschließend an die jeweilige Verzahnung 33 der den Schenkeln 30 angeformt.

Das Klemmteil 40 besitzt eine Vorderwand 41, von der rechtwinklig zwei parallel verlaufende klemmteilseitige Seitenwände 42 mit jeweils einem U-förmigen Endabschnitt 44 wegführen. Die U-förmigen Endabschnitte 44 bilden jeweils eine Nut 46 als Führungsaufnahme für die Führungsstege 35 des Basisteils 20 aus. An der Vorderwand 41 ist eine erste klemmteilseitige Klemmkante 43 mit einer bogenförmigen vorderen Schneide 45 ausgebildet. Über zwei Verbindungsstege 49 mit der Vorderwand 41 verbunden und parallel zu dieser verlaufenden ist eine zweite klemmteilseitige Klemmkante 47 angeordnet. An der zweiten klemmteilseitigen Klemmkante 47 ist eine hintere bogenförmige Schneide 48 ausgebildet.

Beabstandet von den Seitenwänden 42 ist jeweils ein Klemmsteg 50 mit jeweils einer klemmteilseitigen Verzahnung 51 am Klemmteil 40 ausgebildet. Die beiden Klemmstege 50 sind an der einen Seite mit der Vorderwand 41 und seitlich über jeweils einen Stützsteg 52 mit der jeweiligen Seitenwand 44 verbunden (Figur 2). Die Anbindung der Klemmstege 50 mit der Vorderwand 41 und der Seitenwand 44 ist so ausgeführt, dass die Klemmstege 50 im Wesentlichen rechtwinklig zur Kabelverlaufsrichtung biegeelastisch sind. Die Verzahnung 51 ist an der Innenseite des Klemmsteges 50 angebracht, d.h., dass die Verzahnungen 51 an den beiden gegenüberliegenden Klemmstegen 50 zueinander weisen. An den Klemmstegen 50 sind weiterhin jeweils Verlängerungen 53 angeformt, die frontal über die Vorderwand 41 hinaus ragen. Zwischen den Verzahnungen 51 und den Verbindungsstegen 49 ist jeweils ein Spalt 54 ausgebildet, von dem jeweils rechtwinklig ein Führungsspalt 55 zur Nut 46 abzweigt. Der Spalt 54, der der klemmteilseitigen Verzahnung 51 vorgelagert ist, dient zur Aufnahme der Schenkel 30 des Basisteils 20 im Klemmteil 40. Eine zusätzliche Führung des Klemmteils 40 am Basisteil 20 in Richtung des Kabelverlaufs wird durch die in die Führungsstege 35 eingreifenden Nuten 46 realisiert, wie nachfolgend in Verbindung mit Figur 5 noch näher beschrieben wird.

Eine Darstellung der Zugentlastung in Klemmstellung geht aus Figur 3 hervor. Dabei ist das Basisteil 20 in die Öffnung 12 des Gehäuses eingesetzt. Das Elektrokabel 13 wird durch die Bodenöffnung 22 und durch die Kabeleinführöffnung 24 des Basisteils 20 gemäß Figur 4 geführt und mittels des Klemmteils 40 am Basisteil 20 festgeklemmt. Dazu wird das mit dem Bandscharnier 60 mit dem Basisteil 20 verbundene Klemmteil 40 zum Basisteil 20 hin geschwenkt und mit den beiden Spalten 54 auf die beiden Schenkel 30 geschoben. Dabei gelangen die beiden Nuten 46 in Eingriff mit den beiden L-förmigen Führungsstegen 35 des Basisteils 2, wobei, wie aus dem vergrößerten Ausschnitt gemäß Figur 5 hervorgeht, der L-förmige Führungssteg 35 durch den Führungsspalt 55 in die jeweilige Nut 46 greift. Zur Vereinfachung des Einsteckvorganges sind an den Schenkeln 30 im Bereich der Verzahnung 33 jeweils Einführschrägen 36 angebracht. Zusätzliche Einführschrägen 56 befinden sich jeweils an den Klemmstegen 50 (Figur 1).

Der Abstand der gegenüberliegenden Klemmstege 50 ist so dimensioniert, dass die klemmteilseitigen Verzahnungen 51 in die basisteilseitigen Verzahnung 33 an den Schenkeln 30 unter Vorspannung der biegeelastischen Klemmstege 50 eingreifen. Darüber hinaus sind die Zähne der Verzahnungen 33 und 51 jeweils mit Hinterschnitt ausgeführt, so dass sie sich beim Einrasten formschlüssig hintergreifen und dadurch eine Öffnungsbewegung des Klemmteils 40 sperren.

Die Klemmstellung des Klemmteils 40 wird erreicht, indem auf das aufgesteckte Klemmteil 40 eine im Wesentlich senkrecht wirkende Druckkraft aufgebracht wird und dadurch das Klemmteil 40 an den Führungsstegen 35 in Richtung des Elektrokabels 13 gleitet und dabei die beiden Schneiden 45, 48 der Klemmkanten 43, 47 auf das Elektrokabel 13 drücken. Am Basisteil 20 liegt das eingesetzte Elektrokabel 13 in der Kabelaufnahme 31 auf der dort angebrachten Schneide 34 der basisteilseitigen Klemmkante 32 auf. Ist eine ausreichende Druckkraft aufgebracht, so dass eine Klemmung des Elektrokabels 13 realisierbar ist, wird die Druckkraft vom Klemmteil 40 genommen und die Verzahnungen 33, 51 rasten ein, so dass das Klemmteil 40 am Basisteil 20 blockiert ist.

Die Schneiden der Klemmkanten sind dabei zweckmäßigerweise so ausgeführt, dass sie entgegen der Zugrichtung des Elektrokabels 13 wirken bzw. weisen und bei Zugbelastung des Elektrokabels 13 in die Isolierung drücken (Figur 4). Die Lage der Klemmkanten 32, 45, 47 ist außerdem so ausgeführt, dass die basisteilseitige Klemmkante 32 mit der Schneide 34 zwischen den beiden Klemmkanten 43, 47 des Klemmteils 40 mit Bezug zum Elektrokabel 13 liegt, wobei zweckmäßigerweise die hintere Schneide 48 der Klemmkante 47 geringfügig tiefer liegt als die vordere Schneide 45 der Klemmkante 43 (Figur 4).

Eine Lösung der Verrastung ist dadurch möglich, indem an den Verlängerungen 53 eine Kraft aufgebracht wird, die die biegeelastischen Klemmstege 50 auseinander drückt, so dass die Zähne der Verzahnungen 51 aus den Zähnen der Verzahnungen 33 herausgerückt werden und sich dabei die Verrastung löst. Somit ist eine schnelle Festklemmung und eine schnelle Lösung der Klemmung des Elektrokabels 13 in der Zugentlastung ohne Werkzeug möglich.

## Patentansprüche

1. Zugentlastung für ein Elektrokabel, mit einem an einem Gehäuse fixierten Basisteil (20) mit einer Kabelaufnahme (31) für das Elektrokabel (13) und einem die Kabelaufnahme am Basisteil brückenartig überspannenden Klemmteil (40), wobei das Klemmteil mit dem Basisteil mittels einer Rastvorrichtung zum Festklemmen des Elektrokabels verbindbar ist und wobei die Rastvorrichtung durch Verzahnungen am Basisteil und am Klemmteil ausgebildet ist, wobei die Verzahnungen (33) des Basisteils (20) jeweils an gegenüberliegenden Schenkeln (30) nach außen weisend und die Verzahnungen (51) des Klemmteils (40) jeweils an gegenüberliegenden Klemmstegen (50) nach innen weisend angeordnet sind, **dadurch gekennzeichnet, dass** an den Schenkeln (30) des Basisteils (20), der Verzahnung (33) jeweils ein Führungssteg (35) zugeordnet ist, an dem jeweils eine am Klemmteil (40) ausgebildete Führungsaufnahme (44, 46) geführt ist.

2. Zugentlastung nach Anspruch 1, **dadurch gekennzeichnet, dass** die Führungsstege (35) an den Schenkeln (30) des Basisteils (20) jeweils neben den Verzahnungen (33) außerhalb der Kabelaufnahme (31) angeordnet sind.

3. Zugentlastung nach Anspruch 1 oder 2, **dadurch gekennzeichnet, dass** die Führungsstege (35) an den Schenkel (30) des Basisteils (20) jeweils L-förmig ausgeführt sind und die Führungsaufnahmen an dem Klemmteil (40) jeweils eine Nut (46) aufweisen, die in den jeweiligen L-förmigen Führungssteg (35) eingreift.

4. Zugentlastung nach Anspruch 3, **dadurch gekennzeichnet, dass** die Nut (46) von einem an je einer Seitenwand (42) des Klemmteils (40) ausgebildeten U-förmigen Endabschnitt (44) gebildet ist.

5. Zugentlastung nach einem der Ansprüche 1 bis 4, **dadurch gekennzeichnet, dass** sich an die Kabelaufnahme (31) eine Kabeleinführöffnung (24) anschließt, von der eine geneigt wegführende Kabelführung (37) zu einer Bodenöffnung (22) des Basisteils (20) führt.

6. Zugentlastung nach Anspruch 5, **dadurch gekennzeichnet, dass** die Kabelführung (37) von einer erhabenen Abdeckung (25) überspannt ist.

7. Zugentlastung nach einem der Ansprüche 1 bis 6, **dadurch gekennzeichnet, dass** in der Kabelaufnahme (31) des Basisteils (20) mindestens eine basisteilseitige Klemmkante (32) und an dem Klemmteil (40) mindestens zwei klemmteilseitige Klemmkanten (43, 47) ausgebildet sind, wobei in Klemmstellung des Elektrokabels (13) die basisteilseitige Klemmkante (32) zwischen den beiden klemmteilseitigen Klemmkanten (43, 47) liegt.

8. Zugentlastung nach Anspruch 7, **dadurch gekennzeichnet, dass** zumindest eine der Klemmkanten (32, 43, 47) eine entgegen der Zugrichtung des Elektrokabels (13) wirkende Schneide (34, 45, 48) aufweist.

9. Zugentlastung nach Anspruch 8 **dadurch gekennzeichnet, dass** die Schneiden (34, 45, 48) bogenförmig ausgeführt sind.

## Claims

1. Strain relief for an electrical cable, having a base part (20) fixed to a housing with a cable receptacle (31) for the electrical cable (13) and a clamping part (40) spanning the cable receptacle on the base part in a bridge-like manner, wherein the clamping part can be connected to the base part by means of a latching mechanism to clamp down the electrical cable and wherein the latching mechanism is embodied by teeth on the base part and on the clamping part, wherein the teeth (33) of the base part (20) are arranged facing outwards on opposing arms (30) in each case and the teeth (51) of the clamping part (40) are arranged facing inwards on opposing clamping bars (50), **characterised in that** each of the teeth (33) on the arms (30) of the base part (20) is assigned a guide bar (35), to which a guide receptacle (44, 46) embodied on the clamping part (40) is guided in each case.

2. Strain relief according to claim 1, **characterised in that** each of the guide bars (35) are arranged on the arms (30) of the base part (20) adjacent to the teeth (33) outside the cable receptacle (31).

3. Strain relief according to claim 1 or 2, **characterised in that** each of the guide bars (35) on the arms (30) of the base part (20) are implemented in an L-shaped manner and each of the guide receptacles on the clamping part (40) has a groove (46) which engages into the respective L-shaped guide bar (35).

4. Strain relief according to claim 3, **characterised in that** the groove (46) is formed by a U-shaped end section (44) embodied on one side wall (42) of the clamping part (40) in each case.

5. Strain relief according to one of claims 1 to 4, **characterised in that** a cable insertion opening (24) is attached to the cable receptacle (31), from which a cable guide (37) leading away at an angle leads to a base opening (22) of the base part (20).

6. Strain relief according to claim 5, **characterised in that** the cable guide (37) is spanned by an elevated covering (25).

7. Strain relief according to one of claims 1 to 6, **characterised in that** at least one clamping rim (32) on the base part side is embodied in the cable receptacle (31) of the base part (20) and at least two clamping rims (43, 47) on the clamping part side are embodied on the clamping part (40), wherein in the clamping position of the electrical cable (13) the clamping rims (32) on the base part side lie between the two clamping rims (43, 47) on the clamping part side.

8. Strain relief according to claim 7, **characterised in that** at least one of the clamping rims (32, 43, 47) has an edge (34, 45, 48) acting against the strain direction of the electrical cable (13).

9. Strain relief according to claim 8, **characterised in that** the edges (34, 45, 48) are implemented in an arc-shaped manner.

## Revendications

1. Soulagement de traction pour un câble électrique, avec une pièce de base (20) fixée au niveau d'un boîtier, avec un logement de câble (31) pour le câble électrique (13) et une pièce de serrage (40) enjambant à la manière d'un pont le logement de câble au niveau de la pièce de base, dans lequel la pièce de serrage peut être reliée à la pièce de base au moyen d'un système d'encliquetage en vue d'un blocage du câble électrique et dans lequel le système d'encliquetage est formé de dentures au niveau de la pièce de base et au niveau de la pièce de serrage, dans lequel les dentures (33) de la pièce de base (20) sont agencées regardant vers l'extérieur respectivement au niveau de côtés (30) opposés et les dentures (51) de la pièce de serrage (40) sont agencées regardant vers l'intérieur respectivement au niveau de réglettes de serrage (50) opposées, **caractérisé en ce qu'**une réglette de guidage (35), au niveau de laquelle est guidée respectivement un logement de guidage (44, 46) formé au niveau de la pièce de serrage (40), est respectivement associée à la denture (33), au niveau des côtés (30) de la pièce de base (20).

2. Soulagement de traction selon la revendication 1, **caractérisé en ce que** les réglettes de guidage (35) sont agencées au niveau des côtés (30) de la pièce de base (20) respectivement à côté des dentures (33) à l'extérieur du logement de câble (31).

3. Soulagement de traction selon la revendication 1 ou 2, **caractérisé en ce que** les réglettes de guidage (35) sont réalisées respectivement en forme de L au niveau des côtés (30) de la pièce de base (20) et les logements de guidage présentent au niveau de la pièce de serrage (40) respectivement une rainure (46) qui engrène avec la réglette de guidage (35) en forme de L respective.

4. Soulagement de traction selon la revendication 3, **caractérisé en ce que** la rainure (46) est formée d'une section d'extrémité (44) en forme de U formée au niveau de respectivement une paroi latérale (42) de la pièce de serrage (40).

5. Soulagement de traction selon l'une quelconque des revendications 1 à 4, **caractérisé en ce qu'**une ouverture d'introduction de câble (24), à partir de laquelle un guide-câble (37) s'éloignant de manière inclinée guide vers une ouverture de fond (22) de la pièce de base, se raccorde au logement de câble (31).

6. Soulagement de traction selon la revendication 5, **caractérisé en ce que** le guide-câble (37) est enjambé par un couvercle (25) convexe.

7. Soulagement de traction selon l'une quelconque des revendications 1 à 6, **caractérisé en ce qu'**au moins une arête de serrage (32) côté pièce de base est formée dans le logement de câble (31) de la pièce de base (20) et au moins deux arêtes de serrage (43, 47) côté pièce de serrage sont formées au niveau de la pièce de serrage (40), dans lequel, dans une position de serrage du câble électrique (13), l'arête de serrage (32) côté pièce de base se situe entre les deux arêtes de serrage (43, 47) côté pièce de serrage.

8. Soulagement de traction selon la revendication 7, **caractérisé en ce qu'**au moins une des arêtes de serrage (32, 43, 47) présente une découpe (34, 45, 48) agissant à l'encontre de la direction de traction du câble électrique (13).

9. Soulagement de traction selon la revendication 8, **caractérisé en ce que** les découpes (34, 45, 48) sont réalisées en forme d'arc.
